# EUROPÄISCHE PATENTSCHRIFT

(11) **EP 3 645 327 B1**
(45) Veröffentlichungstag und Bekanntmachung des Hinweises auf die Patenterteilung: **25.05.2022**
(21) Anmeldenummer: 18734109.4
(22) Anmeldetag: 11.06.2018
(51) Int. Cl.: B60K 6/48, B60K 6/36, B60K 6/365, B60K 6/40, B60K 6/547, F16H 37/04, F16H 3/00, F16H 3/093

(54) **HYBRIDANTRIEBSVORRICHTUNG**
HYBRID DRIVE DEVICE
DISPOSITIF D'ENTRAÎNEMENT HYBRIDE

(30) Priorität: 28.06.2017 DE 102017006082
(43) Veröffentlichungstag der Anmeldung: 06.05.2020
(73) Patentinhaber: Daimler AG, 70372 Stuttgart (DE)
(72) Erfinder: BOU ROMANO, Josep, Maria, 71384 Weinstadt (DE); HAHN, Peter, 70374 Stuttgart (DE); HAERTER, Tobias, 70174 Stuttgart (DE); ROMANIAK, Jakub, 70186 Stuttgart (DE); SCHWEITZER, Juergen, 70794 Filderstadt (DE); SPERRFECHTER, Stefan, 73072 Donzdorf (DE); SCHILDER, Tobias, 70794 Filderstadt (DE); KOLB, Andreas, 73249 Wernau (DE)
(74) Vertreter: JENSEN & SON
(86) Internationale Anmeldenummer: PCT/EP2018/065252
(87) Internationale Veröffentlichungsnummer: WO 2019/001937

(56) Entgegenhaltungen:
- DE-A1- 19 944 999
- JP-A- 2005 329 841
- US-A1- 2013 102 430
- US-A1- 2013 226 416

## Beschreibung

Die Erfindung betrifft eine Hybridantriebsvorrichtung, insbesondere mit einer Radsatzstruktur für ein dezidiertes Hybridgetriebe.

Aus der DE 10 2010 053 757 A1, der JP 2005 329 841 A und der gattungsgemäßen DE 199 44 999 A1 sind bereits Hybridantriebsvorrichtungen mit einem Verbrennungsmotor, mit einer elektrischen Maschine, die einen Rotor aufweist, mit einem Planetengetriebe, mit einem ersten Stirnradteilgetriebe und mit einem zweiten Stirnradteilgetriebe bekannt, wobei die elektrische Maschine direkt an das Planetengetriebe angebunden ist, wobei das erste Stirnradteilgetriebe und das zweite Stirnradteilgetriebe direkt an das Planetengetriebe angebunden sind, wobei das Planetengetriebe zwei Planetenradsätze aufweist, wobei ein erster Planetenradsatz des Planetengetriebes ein Hohlrad, einen ersten Planetenradträger und ein erstes Sonnenrad aufweist.

Der Erfindung liegt insbesondere die Aufgabe zugrunde, eine vorteilhaft kompakte Hybridantriebsvorrichtung, insbesondere für eine Front-Quer Architektur bereitzustellen. Sie wird durch eine erfindungsgemäße Ausgestaltung entsprechend dem Anspruch 1 gelöst. Weiterbildungen der Erfindung ergeben sich aus den abhängigen Ansprüchen. Ziel ist es insbesondere bei einer Hybridantriebsvorrichtung mit einem dedizierten Getriebe für Front-Quer Architektur eine kompakte aber trotz allem funktionale Struktur bereitzustellen.

Die Erfindung geht aus von einer Hybridantriebsvorrichtung mit einem Verbrennungsmotor, mit einer elektrischen Maschine, die einen Rotor aufweist, mit einem Planetengetriebe, mit einem ersten Stirnradteilgetriebe und mit einem zweiten Stirnradteilgetriebe, wobei das erste Stirnradteilgetriebe eine erste Eingangswelle aufweist und das zweite Stirnradteilgetriebe eine zweite Eingangswelle aufweist, wobei der Verbrennungsmotor über eine Trennkupplung an das Planetengetriebe und die elektrische Maschine direkt an das Planetengetriebe angebunden sind, wobei das erste Stirnradteilgetriebe und das zweite Stirnradteilgetriebe direkt an das Planetengetriebe angebunden sind, wobei das Planetengetriebe zwei Planetenradsätze, nämlich einen ersten und einen zweiten Planetenradsatz, aufweist, wobei der erste Planetenradsatz des Planetengetriebes ein Hohlrad, einen ersten Planetenradträger und ein erstes Sonnenrad aufweist.

Es ferner davon ausgegangen, dass der zweite Planetenradsatz ein zweites Hohlrad aufweist und das Hohlrad und das zweite Hohlrad drehfest miteinander gekoppelt sind und mit dem Rotor der elektrischen Maschine drehmomentübertragend gekoppelt sind.

Unter einer drehfesten Kopplung zweier Elemente soll verstanden werden, dass die beiden Elemente koaxial angeordnet sind und derart verbunden sind, dass sie immer mit der gleichen Winkelgeschwindigkeit drehen. Unter einer drehmomentübertragenden Kopplung zweier Elemente soll allgemeiner verstanden werden, dass die beiden Elemente derart gekoppelt sind, dass bei einer Drehung des einen Elementes ein Drehmoment an das andere Element übertragen wird.

Erfindungsgemäß wird vorgeschlagen, dass die zweite Eingangswelle permanent drehfest mit dem ersten Planetenradträger des ersten Planetenradsatzes und mit einem zweiten Planetenradträger des zweiten Planetenradsatzes des Planetengetriebes ausgebildet ist. Dadurch kann insbesondere eine axiale Baulänge gering gehalten werden. Ferner kann insbesondere eine Anzahl an Bauteilen gering gehalten werden.

Besonders vorteilhaft ist dabei der Rotor der elektrischen Maschine drehfest mit dem Hohlrad und dem zweiten Hohlrad gekoppelt. Dabei ist es wiederum besonders vorteilhaft, wenn der Rotor das Hohlrad und/oder das zweite Hohlrad radial umgibt.

Alternativ und ebenfalls vorteilhaft ist der Rotor achsparallel zu dem Hohlrad und dem zweiten Hohlrad angeordnet und über eine Stirnradstufe mit dem Hohlrad und dem zweiten Hohlrad drehmomentübertragend gekoppelt.

Als besonders vorteilhaft wird vorgeschlagen, dass das Hohlrad und das zweite Hohlrad ein gemeinsames Hohlrad ausbilden und somit der erste Planetenradsatz und der zweite Planetenradsatz des Planetengetriebes ein gemeinsames Hohlrad aufweisen, welches permanent drehfest mit dem Rotor der elektrischen Maschine gekoppelt ist. Vorzugsweise ist das Planetengetriebe insbesondere als vier-welliges Planetengetriebe ausgebildet. Durch die Verwendung eines vier-welligen Planetengetriebe anstatt eines fünf-welligen kann insbesondere ein vorteilhaft einfacher Aufbau des Planetengetriebes, ein vorteilhafter Wirkungsgrad sowie der Entfall einer Bremse erreicht werden. Durch das vier-wellige Planetengetriebe kann durch den Entfall der Bremse und eines Hohlrads die Getriebelänge verkürzt werden. Das Planetengetriebe ist insbesondere dazu vorgesehen, Antriebsmomente des Verbrennungsmotors und der elektrischen Maschine zusammenzuführen und als ein gemeinsames Antriebsmoment an eine Getriebeeinheit zu übertragen. Dadurch kann insbesondere eine vorteilhaft kompakte Hybridantriebsvorrichtung bereitgestellt werden. Dies kann insbesondere durch eine hohe Integration der elektrischen Maschine erzielt werden. Dadurch können insbesondere Elemente wie Anfahrkupplung, Synchronisierungen, Vorwärtsgänge und RW-Gang entfallen und somit können Länge und eventuell Kosten gering gehalten werden. Es kann insbesondere zumindest ein Hohlrad entfallen, wodurch eine vorteilhaft geringe Getriebelänge erreicht werden kann. Es können insbesondere vorteilhaft harmonische und Wirkungsgrad-optimierte Übersetzungsstufen bereitgestellt werden.

Mit dem gemeinsamen Hohlrad ist ein Hohlrad mit einheitlichem Verzahnungsradius gemeint, dessen Verzahnung so breit ausgebildet ist, dass sie sowohl mit Planetenrädern des ersten Planetenradsatzes als auch mit Planetenrädern des zweiten Planetenradsatzes kämmt.

Mit der Trennkupplung ist eine formschlüssige oder eine reibschlüssige Kupplung oder auch ein Freilauf gemeint.

Mit der direkten Anbindung der elektrischen Maschine, des ersten Stirnradteilgetriebes und des zweiten Stirnradteilgetriebes an das Planetengetriebe ist eine Anbindung ohne dazwischen befindliche Trennkupplung gemeint. Es ist jedoch denkbar, dass zwischen den Stirnradteilgetrieben und dem Planetengetriebe eine Übersetzungsstufe angeordnet sein kann. Ebenso ist es denkbar, dass zwischen der elektrischen Maschine und dem Planetengetriebe eine Übersetzungsstufe angeordnet ist.

Zur Anbindung des Verbrennungsmotors an das Planetengetriebe, der elektrischen Maschine an das Planetengetriebe und der beiden Stirnradteilgetriebe an das Planetengetriebe, weist das Planetengetriebe mindestens die vier oben genannten Wellen auf, wobei der Verbrennungsmotor, die elektrische Maschine und die beiden Stirnradteilgetriebe jeweils an eine andere der vier Wellen angebunden sind. Die vier Wellen sind dabei jeweils mit einem anderen Element des Planetengetriebes drehfest gekoppelt. Elemente des Planetengetriebes sind z. B. Hohlräder, Planetenträger, Sonnenräder.

Das erste Stirnradteilgetriebe ist vorzugsweise zur Schaltung von einem Getriebegang vorgesehen, während im zweiten Stirnradteilgetriebe ein Getriebegang eingelegt ist. Vorzugsweise sind das erste Stirnradteilgetriebe und das zweite Stirnradteilgetriebe voneinander unabhängig, d.h. in dem ersten Stirnradteilgetriebe kann unabhängig von einem Getriebegang, der in dem zweiten Stirnradteilgetriebe eingelegt ist, ein zweiter Getriebegang eingelegt werden, wobei eine Schaltlogik für die Getriebeeinheit, die die zwei Stirnradteilgetriebe umfasst, durch eine Lastschaltbarkeit zwischen den beiden Stirnradteilgetrieben festgelegt ist. Unter einem "Planetenradsatz" soll dabei insbesondere eine Einheit mit einem Sonnenrad, einem Hohlrad und mit zumindest einem von einem Planetenradträger auf einer Kreisbahn um das Sonnenrad geführten Planetenrad verstanden werden. Vorteilhafterweise weist der Planetenradsatz genau ein Standübersetzungsverhältnis auf. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Vorzugsweise umfasst das erste Stirnradteilgetriebe und/oder das zweite Stirnradteilgetriebe zumindest eine Schalteinheit. Unter einer "Schalteinheit" soll insbesondere eine Einheit mit genau zwei Kopplungselementen verstanden werden, die dazu vorgesehen ist, zwei drehbar zueinander gelagerte Getriebeelemente, wie beispielsweise ein Losrad und eine Getriebeausgangswelle oder ein Losrad und eine Getriebeeingangswelle oder benachbarte Losräder unterschiedlicher Zahnradebenen schaltbar drehfest miteinander zu verbinden. Zwei benachbarte, insbesondere axial benachbarte, Schalteinheiten können dabei grundsätzlich zu einer gemeinsamen Doppelschalteinheit zusammengefasst werden, indem beispielsweise ein gemeinsames Kopplungselement für beide Schalteinheiten vorgesehen wird. Jede der Schalteinheiten kann grundsätzlich als eine rein formschlüssige Schalteinheit, beispielsweise als Klauenkupplung, als form- und reibschlüssige Schalteinheit, beispielsweise in Form einer synchronisierten Klauenkupplung, oder als eine rein reibschlüssige Schalteinheit, beispielsweise in Form einer Lamellenkupplung, ausgeführt werden.

Eine Weiterbildung der Erfindung sieht eine gemeinsame Vorgelegewelle vor, welche ein Festrad und ein Losrad aufweist, wobei das Festrad permanent mit einem Rad des ersten Stirnradteilgetriebes kämmt und das Losrad permanent mit einem Rad des zweiten Stirnradteilgetriebes kämmt.

Anders ausgedrückt und ebenso erfindungswesentlich ist das Festrad der gemeinsamen Vorgelegewelle permanent mit einer Welle des Planetengetriebes gekoppelt und das Losrad der gemeinsamen Vorgelegewelle permanent mit einer anderen Welle des Planetengetriebes gekoppelt.

Auf diese Weise lässt sich insbesondere ein axial kurzes Hybridgetriebe darstellen.

Ferner wird vorgeschlagen, dass die Hybridantriebsvorrichtung eine erste Vorgelegewelle und eine zweite Vorgelegewelle aufweist, wobei das erste Stirnradteilgetriebe zumindest ein Zahnrad der ersten Eingangswelle, zumindest ein Zahnrad der ersten Vorgelegewelle und zumindest ein Zahnrad der gemeinsamen Vorgelegewelle aufweist, und wobei das zweite Stirnradteilgetriebe zumindest ein Zahnrad der zweiten Eingangswelle, zumindest ein Zahnrad der zweiten Vorgelegewelle und zumindest ein Zahnrad der gemeinsamen Vorgelegewelle aufweist. Vorzugsweise weist die Hybridantriebsvorrichtung genau zwei Eingangswellen und genau drei Vorgelegewellen auf. Bevorzugt sind die Eingangswellen direkt mit dem Planetengetriebe gekoppelt, welches dazu vorgesehen ist, Antriebsmomente des Verbrennungsmotors und der elektrischen Maschine zusammenzuführen und als ein gemeinsames Antriebsmoment an eine Getriebeeinheit zu übertragen. Die Eingangswellen sind insbesondere abtriebsseitig des Planetengetriebes angeordnet. Vorzugsweise sind die erste Eingangswelle und die zweite Eingangswelle koaxial zueinander angeordnet. Bevorzugt sind die Vorgelegewellen insbesondere zumindest teilweise parallel zu den Eingangswellen neben den Eingangswellen angeordnet. Dadurch kann insbesondere eine vorteilhaft kompakte Anordnung der Hybridantriebsvorrichtung erreicht werden. Es kann insbesondere eine vorteilhaft integrierte, insbesondere verschachtelte, Anordnung der Stirnradteilgetriebe erreicht werden. Vorzugsweise übernimmt die gemeinsame Vorgelegewelle insbesondere die Funktion einer Bremse. Hierdurch kann eine Unterstützung von Lastschaltungen komfortabel und einfach ermöglicht werden. Die Funktion der entfallenden Bremse wird insbesondere ersetzt durch eine zusätzliche gemeinsame Vorgelegewelle. Somit werden insbesondere harmonische und Wirkungsgrad-optimierte Gangstufungen ermöglicht und die Schaltung kann komfortabler und einfacher ausgeführt werden. Unter einem "Zahnrad einer Welle" soll in diesem Zusammenhang insbesondere ein direkt auf der entsprechenden Welle gelagertes Losrad und/oder ein fest mit der Welle verbundenes Festrad verstanden werden. Vorzugsweise weisen das Zahnrad und die Welle eine gemeinsame Rotationsachse auf.

Des Weiteren wird vorgeschlagen, dass die gemeinsame Vorgelegewelle zwei Zahnräder aufweist. Vorzugsweise weist die gemeinsame Vorgelegewelle genau zwei Zahnräder auf. Bevorzugt kämmt ein erstes Zahnrad der gemeinsamen Vorgelegewelle mit einem Festrad der zweiten Eingangswelle und ein zweites Zahnrad der gemeinsamen Vorgelegewelle mit einem Festrad der ersten Eingangswelle. Besonders bevorzugt weist die gemeinsame Vorgelegewelle ein Festrad und ein Losrad auf. Dadurch kann insbesondere eine vorteilhaft kompakte, gemeinsame Vorgelegewelle erreicht werden. Es kann insbesondere eine axiale Erstreckung der Hybridantriebsvorrichtung vorteilhaft gering gehalten werden.

Es wird ferner vorgeschlagen, dass ein erstes Zahnrad der gemeinsamen Vorgelegewelle in einer ersten Zahnradebene angeordnet ist und ein zweites Zahnrad der gemeinsamen Vorgelegewelle in einer zu der ersten Zahnradebene unbenachbarten weiteren Zahnradebene angeordnet ist. Vorzugsweise ist zumindest eine zweite Zahnradebene zwischen der ersten Zahnradebene und der weiteren Zahnradebene angeordnet. Bevorzugt ist die weitere Zahnradebene insbesondere von einer dritten Zahnradebene gebildet. Dadurch kann insbesondere eine übergreifende Anordnung der gemeinsamen Vorgelegewelle erreicht werden. Es kann insbesondere eine vorteilhaft radiale Anordnung der Hybridantriebsvorrichtung bereitgestellt werden. Unter "unbenachbart" soll in diesem Zusammenhang insbesondere verstanden werden, dass zwischen der ersten Zahnradebene und der weiteren Zahnradebene zumindest eine weitere Zahnradebene angeordnet ist. Das erste Zahnrad der gemeinsamen Vorgelegewelle und das zweite Zahnrad der gemeinsamen Vorgelegewelle sind daher insbesondere nicht in benachbarten Zahnradebenen angeordnet.

Es wird weiter vorgeschlagen, dass die erste Eingangswelle ein erstes Festrad aufweist, welches mit einem Losrad der ersten Vorgelegewelle kämmt, und ein zweites Festrad aufweist, welches mit einem Losrad der gemeinsamen Vorgelegewelle kämmt. Vorzugsweise weist die erste Eingangswelle abtriebsseitig genau zwei Zahnräder, insbesondere genau zwei Festräder, auf. Bevorzugt ist die erste Eingangswelle von einer Hohlwelle gebildet, durch welche sich die zweite Eingangswelle erstreckt. Dadurch kann die Hybridantriebsvorrichtung besonders kompakt ausgebildet werden.

Zudem wird vorgeschlagen, dass die zweite Eingangswelle ein drittes Festrad aufweist, welches mit einem Losrad der ersten Vorgelegewelle kämmt, und ein viertes Festrad aufweist, welches mit einem Festrad der gemeinsamen Vorgelegewelle kämmt. Vorzugsweise weist die erste Eingangswelle abtriebsseitig genau zwei Zahnräder, insbesondere genau zwei Festräder, auf. Dadurch kann die Hybridantriebsvorrichtung besonders kompakt ausgebildet werden.

Ferner wird vorgeschlagen, dass ein viertes Festrad der zweiten Eingangswelle mit einem Losrad der zweiten Vorgelegewelle kämmt. Vorzugsweise kämmt das vierte Festrad der zweiten Eingangswelle mit einem Losrad der zweiten Vorgelegewelle und mit einem Festrad der gemeinsamen Vorgelegewelle. Dadurch kann die Hybridantriebsvorrichtung besonders kompakt ausgebildet werden. Es kann insbesondere eine Anzahl von Bauteilen, insbesondere von Zahnrädern gering gehalten werden.

Des Weiteren wird vorgeschlagen, das ein zweites Festrad der ersten Eingangswelle mit einem Losrad der zweiten Vorgelegewelle kämmt. Vorzugsweise kämmt das zweite Festrad der ersten Eingangswelle mit einem Losrad der zweiten Vorgelegewelle und mit einem Losrad der gemeinsamen Vorgelegewelle. Dadurch kann die Hybridantriebsvorrichtung besonders kompakt ausgebildet werden. Es kann insbesondere eine Anzahl von Bauteilen, insbesondere von Zahnrädern gering gehalten werden.

Es wird ferner vorgeschlagen, dass die Stirnradteilgetriebe genau vier Zahnradebenen aufweisen. Vorzugweise weisen die Stirnradteilgetriebe gemeinsam genau vier Zahnradebenen auf. Dadurch kann die Hybridantriebsvorrichtung besonders kompakt ausgebildet werden. Es kann insbesondere ein Getriebe mit genau vier Zahnradebenen bereitgestellt werden. Dadurch kann insbesondere eine axiale Baulänge gering gehalten werden.

Es wird ferner vorgeschlagen, dass die Hybridantriebsvorrichtung eine Parksperreinheit aufweist, mit zumindest einem Parksperrenrad, welches permanent drehfest mit einer zweiten Vorgelegewelle verbunden ist. Vorzugsweise ist das Parksperrenrad auf einer axial dem Verbrennungsmotor abgewandten Seite der zweiten Vorgelegewelle angeordnet. Besonders bevorzugt ist das Parksperrenrad an einem axial dem Verbrennungsmotor abgewandten Ende der zweiten Vorgelegewelle angeordnet. Dadurch kann insbesondere eine vorteilhafte Integration der Parksperreinheit erreicht werden. Es kann insbesondere ein vorteilhaft kompakter Aufbau erreicht werden. Unter einer "Parksperreinheit" soll in diesem Zusammenhang insbesondere eine Einheit eines Getriebes, insbesondere eines Automatikgetriebes, verstanden werden, welche zu einem blockieren des Getriebes, insbesondere zu einem Festhalten eines Kraftfahrzeugs in einem geparkten Zustand, vorgesehen ist. Vorzugsweise weist die Parksperreinheit insbesondere zumindest ein Parksperrenrad und zumindest eine Sperrklinke auf, welche zu einer Verblockung dazu vorgesehen ist, formschlüssig in das Parksperrenrad einzurasten.

Es wird weiter vorgeschlagen, dass die gemeinsame Vorgelegewelle hinsichtlich einer horizontalen Ebene auf einer anderen Seite angeordnet ist als eine Aktuatorik von Schalteinheiten des ersten Stirnradteilgetriebes und des zweiten Stirnradteilgetriebes angeordnet ist. Auf diese Weise lässt sich ein radial kompaktes Hybridgetriebe darstellen.

Betrachtet man die Anordnung der Wellen des Hybridgetriebes in einer Schnittebene, die senkrecht zu den Wellen angeordnet ist, so ist die gemeinsame Vorgelegewelle vorteilhafterweise oberhalb oder unterhalb der Eingangswellen der Stirnradteilgetriebe angeordnet, wobei die Aktuatorik von Schalteinheiten des ersten Stirnradteilgetriebes und/oder des zweiten Stirnradteilgetriebes auf der jeweils unterhalb bzw. oberhalb der Eingangswelle, d.h. entgegengesetzt angeordnet ist.

Vorteilhafter Weise kann das Hybridgetriebe in einem Fahrzeug quereingebaut werden.

Besonders vorteilhaft ist die gemeinsame Vorgelegewelle oberhalb der ersten Vorgelegewelle und/oder der zweiten Vorgelegewelle angeordnet ist. Vorzugsweise ist die gemeinsame Vorgelegewelle oberhalb der ersten Vorgelegewelle und der zweiten Vorgelegewelle angeordnet. Dadurch kann die Hybridantriebsvorrichtung besonders kompakt ausgebildet werden. Es kann insbesondere eine vorteilhafte Anbindung der ersten Vorgelegewelle und/oder der zweiten Vorgelegewelle an ein Achsgetriebe, insbesondere an ein Differential, erreicht werden. Unter "oberhalb" soll in diesem Zusammenhang insbesondere räumlich relativ zu einer Standebene des Kraftfahrzeugs oberhalb der ersten Vorgelegewelle und/oder der zweiten Vorgelegewelle angeordnet verstanden werden. Vorzugsweise soll darunter insbesondere verstanden werden, dass ein minimaler Abstand der gemeinsamen Vorgelegewelle zu der Standebene des Kraftfahrzeugs größer ist als ein minimaler Abstand der ersten Vorgelegewelle und/oder der zweiten Vorgelegewelle zu der Standebene des Kraftfahrzeugs. Dabei soll unter einer "Standebene des Kraftfahrzeugs" in diesem Zusammenhang insbesondere eine Ebene verstanden werden, welche sich durch die Reifenauflagepunkte der Räder des Kraftfahrzeugs erstreckt.

Zudem wird vorgeschlagen, dass eine erste Eingangswelle permanent drehfest mit einem zweiten Sonnenrad des zweiten Planetenradsatzes des Planetengetriebes ausgebildet ist. Dadurch kann insbesondere eine axiale Baulänge gering gehalten werden. Ferner kann insbesondere eine Anzahl an Bauteilen gering gehalten werden.

Des Weiteren wird vorgeschlagen, dass die Hybridantriebsvorrichtung eine Schalteinheit aufweist, welche dazu vorgesehen ist, ein Losrad der gemeinsamen Vorgelegewelle drehfest mit einem Festrad der gemeinsamen Vorgelegewelle zu verbinden. Vorzugsweise ist die Schalteinheit als Kupplung, insbesondere als eine Verblockungskupplung, ausgebildet. Unter einer Schalteinheit, die als "Kupplung" ausgebildet ist, soll insbesondere eine Schalteinheit verstanden werden, die in einem Leistungsfluss zwischen zwei der Planetenradstufen angeordnet ist und die dazu vorgesehen ist, ihre zwei drehbar angeordneten Kopplungselemente, die in einem geöffneten Zustand unabhängig voneinander verdrehbar sind, in einem geschlossenen Zustand drehfest miteinander zu verbinden. Die Schalteinheit hat insbesondere die Funktion, das Planetengetriebe zu verblocken, sodass alle fünf Wellen der Hybridantriebsvorrichtung, also insbesondere die erste Eingangswelle, die zweite Eingangswelle, die erste Vorgelegewelle, die zweite Vorgelegewelle und die gemeinsame Vorgelegewelle, mit gleicher Drehzahl drehen. Um das zur erzielen, müssen lediglich zwei beliebige Wellen des Planetengetriebes miteinander gekoppelt werden. Deshalb können grundsätzlich konstruktiv auch andere Wellen für die Schalteinheit genommen werden.

Ferner kann grundsätzlich auch eine Lage der Radpaare der Stirnradteilgetriebe gegenüber einer beschriebenen und gezeigten Anordnung abweichen. So ist es grundsätzlich auch möglich, dass aus konstruktiven Gründen Radebenen des gleichen Stirnradteilgetriebes getauscht werden. Das gilt auch für die Lage der Parksperreinheit. Auch können die erste Vorgelegewelle und die zweite Vorgelegewelle eventuell auch miteinander getauscht werden. Des Weiteren kann auch eine Anordnung der elektrischen Maschine verändert werden. Insbesondere muss die elektrische Maschine nicht unbedingt koaxial angeordnet sein.

Die Begriffe "axial" und "radial" sind hierbei insbesondere auf eine Hauptrotationsachse des Getriebes, insbesondere der Eingangswellen, bezogen, sodass der Ausdruck "axial" insbesondere eine Richtung bezeichnet, die parallel oder koaxial zu der Hauptrotationsachse verläuft. Ferner bezeichnet der Ausdruck "radial" insbesondere eine Richtung, die senkrecht zu der Hauptrotationsachse verläuft. Unter einer "getriebeeingangsseitigen Anordnung" soll insbesondere verstanden werden, dass das genannte Bauteil auf einer Seite des weiteren Bauteils angeordnet ist, welche dem Getriebeeingangselement und/oder der Brennkraftmaschine zugewandt ist. Unter einer "getriebeausgangsseitigen Anordnung" soll insbesondere verstanden werden, dass das genannte Bauteil auf einer Seite des weiteren Bauteils angeordnet ist, welche dem Getriebeeingangselement und/oder der Brennkraftmaschine abgewandt ist, auch wenn das weitere Bauteil in axialer Richtung nach dem Getriebeausgangselement angeordnet ist.

Weitere Vorteile ergeben sich aus der folgenden Figurenbeschreibung. In den Figuren sind zwei Ausführungsbeispiele der Erfindung dargestellt. Die Figuren, die Figurenbeschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: eine schematische Darstellung eines Kraftfahrzeugs mit einer erfindungsgemäßen Hybridantriebsvorrichtung in einer schematischen Darstellung,
- Fig. 2: die erfindungsgemäße Hybridantriebsvorrichtung mit einem Verbrennungsmotor, mit einer elektrischen Maschine, mit einem Planetengetriebe und mit zwei Stirnradteilgetrieben in einer schematischen Darstellung,
- Fig. 3: die erfindungsgemäße Hybridantriebsvorrichtung in einer schematischen Seitenansicht,
- Fig. 4: eine Schalttabelle der erfindungsgemäßen Hybridantriebsvorrichtung und
- Fig. 5: eine alternative erfindungsgemäße Hybridantriebsvorrichtung mit einem Verbrennungsmotor, mit einer elektrischen Maschine, mit einem Planetengetriebe und mit zwei Stirnradteilgetrieben in einer schematischen Darstellung,
- Fig. 6: eine weitere alternative erfindungsgemäße Hybridantriebsvorrichtung.

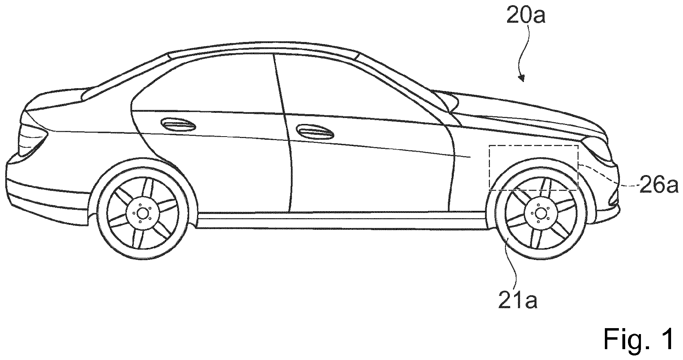

Die Figur 1 zeigt schematisch ein Kraftfahrzeug 20a. Das Kraftfahrzeug 20a ist beispielhaft von einem PKW gebildet. Das Kraftfahrzeug 20a ist von einem frontgetriebenen Kraftfahrzeug gebildet. Das Kraftfahrzeug 20a ist von einem frontgetriebenen Hybrid-Kraftfahrzeug gebildet. Das Kraftfahrzeug 20a umfasst einen Antriebsstrang, über welchen nicht weiter sichtbar Antriebsräder 21a des Kraftfahrzeugs 20a angetrieben werden. Der Antriebsstrang umfasst eine Hybridantriebsvorrichtung 10a. Das Kraftfahrzeug 20a weist die Hybridantriebsvorrichtung 10a auf. Die Hybridantriebsvorrichtung 10a weist einen Verbrennungsmotor 11a auf. Der Verbrennungsmotor 11a ist quer eingebaut. Die Hybridantriebsvorrichtung 10a ist quer eingebaut. Die Hybridantriebsvorrichtung 10a weist eine Front-Quer-Architektur auf. Die Hybridantriebsvorrichtung 10a ist quer zu einer vorgesehenen Geradeausfahrtrichtung eingebaut. Ferner weist die Hybridantriebsvorrichtung 10a eine elektrische Maschine 12a auf, die einen Rotor 17a aufweist. Ferner weist die elektrische Maschine 12a einen Stator 22a auf. Die elektrische Maschine 12a ist auf einer dem Verbrennungsmotor 11a zugewandten Seite der Hybridantriebsvorrichtung 10a angeordnet.

Die elektrische Maschine 12a ist neben dem Verbrennungsmotor 11a zur Erzeugung eines weiteren Antriebsmoments vorgesehen. Die elektrische Maschine 12a bildet einen Elektromotor aus. Ebenso wäre es möglich, anstelle der elektrischen Maschine 12a eine hydraulische oder pneumatische Antriebseinheit mit entsprechend zugeordnetem Energiespeicher vorzusehen. Die elektrische Maschine 12a ist dazu vorgesehen, wahlweise eine elektrische Energie in eine mechanische Energie umzuwandeln oder eine mechanische Energie in eine elektrische Energie umzuwandeln. Dazu weist die elektrische Maschine 12a einen Stator 22a und einen Rotor 17a auf. Der Stator 22a ist fest mit einer Karosserie des Kraftfahrzeugs 20a verbunden. Der Rotor 17a ist drehbar zu dem Stator 22a angeordnet. Zur Bereitstellung und Speicherung der elektrischen Energie weist das Kraftfahrzeug 20a eine nicht näher dargestellte Akkuvorrichtung auf. Die Akkuvorrichtung ist dazu vorgesehen, elektrische Energie zum Antrieb der elektrischen Maschine 12a bereitzustellen und elektrische Energie zu speichern, die vom Verbrennungsmotor 11a erzeugt oder von einem externen Stromnetz eingespeist wird.

Die Hybridantriebsvorrichtung 10a weist ferner ein Mehrstufengetriebe auf. Die Hybridantriebsvorrichtung 10a weist ein Planetengetriebe 13a auf. Das Planetengetriebe 13a ist zur Übertragung eines Drehmoments vom Verbrennungsmotor 11a und/oder von der elektrischen Maschine 12a zu dem Mehrstufengetriebe vorgesehen. Das Planetengetriebe 13a weist zwei Planetenradsätze P1a, P2a auf. Das Planetengetriebe 13a weist einen ersten Planetenradsatz P1a und einen zweiten Planetenradsatz P2a auf. Der erste Planetenradsatz P1a des Planetengetriebes 13a weist ein Hohlrad P11a, einen ersten Planetenradträger P12a, und ein erstes Sonnenrad P13a auf. Der erste Planetenradsatz P1a und der zweite Planetenradsatz P2a des Planetengetriebes 13a weisen ein gemeinsames Hohlrad P11a auf. Ferner weist der zweite Planetenradsatz P2a des Planetengetriebes 13a einen zweiten Planetenradträger P22a, und ein zweites Sonnenrad P23a auf. Der erste Planetenradträger P12a des ersten Planetenradsatzes P1a und der zweite Planetenradträger P22a des zweiten Planetenradsatzes P2a sind permanent drehfest miteinander verbunden. Ferner ist das gemeinsame Hohlrad P11a des Planetengetriebes 13a permanent drehfest mit dem Rotor 17a der elektrischen Maschine 12a gekoppelt ist. Die elektrische Maschine 12a ist direkt an das Planetengetriebe 13a angebunden. Das Planetengetriebe 13a ist radial innerhalb des Rotors 17a der elektrischen Maschine 12a angeordnet. Das Planetengetriebe 13a ist radial innerhalb der elektrischen Maschine 12a angeordnet.

Das Planetengetriebe weist 4 Wellen auf: das erste Sonnenrad P13a, das gemeinsame Hohlrad P11a, den ersten Planetenträger P12a, der vorteilhaft drehfest mit dem zweiten Planententräger P22a gekoppelt ist, und das zweite Sonnenrad P23a.

Anstelle des gemeinsamen Hohlrades P11 a ist auch eine, nicht dargestellte jedoch ebenfalls vorteilhafte, Ausführung möglich, bei der ein Hohlrad des ersten Planetenradsatzes und ein zweites Hohlrad des zweiten Planetenradsatzes drehfest miteinander gekoppelt sind, wobei das Hohlrad des ersten Planetenradsatzes und das zweite Hohlrad des zweiten Planetenradsatzes unterschiedliche Radien aufweisen.

Ferner ist der Verbrennungsmotor 11a über eine Trennkupplung 16a an das Planetengetriebe 13a angebunden. Dazu ist ein erstes Kopplungselement der Trennkupplung 16a permanent mit einer Kurbelwelle 23a des Verbrennungsmotors 11a gekoppelt. In der dargestellten Ausführung ist das erste Kopplungselement der Trennkupplung 16a permanent drehfest mit der Kurbelwelle 23a des Verbrennungsmotors 11a verbunden. Grundsätzlich wäre jedoch auch denkbar, dass das erste Kopplungselement der Trennkupplung 16a über eine Stirnradverzahnung mit der Kurbelwelle 23a des Verbrennungsmotors 11a gekoppelt ist. Ein zweites Kopplungselement der Trennkupplung 16a ist permanent drehfest mit dem ersten Sonnenrad P13a des ersten Planetenradsatzes P1a gekoppelt.

Des Weiteren weist die Hybridantriebsvorrichtung 10a ein erstes Stirnradteilgetriebe 14a und ein zweites Stirnradteilgetriebe 15a auf. Das erste Stirnradteilgetriebe 14a und das zweite Stirnradteilgetriebe 15a sind in einem Kraftfluss parallel zueinander schaltbar. Das erste Stirnradteilgetriebe 14a ist in einer axialen Richtung vor dem zweiten Stirnradteilgetriebe 15a angeordnet. Das erste Stirnradteilgetriebe 14a weist unterschiedliche Getriebeübersetzungen auf. Das erste Stirnradteilgetriebe 14a weist eine erste Eingangswelle EW1a auf. Das Antriebsmoment wird über die erste Eingangswelle EW1a in das erste Stirnradteilgetriebe 14a eingeleitet. Das zweite Stirnradteilgetriebe 15a weist unterschiedliche Getriebeübersetzungen auf. Das zweite Stirnradteilgetriebe 15a weist eine zweite Eingangswelle EW2a auf. Das Antriebsmoment wird über die zweite Eingangswelle EW2a in das zweite Stirnradteilgetriebe 15a eingeleitet.

Das erste Stirnradteilgetriebe 14a und das zweite Stirnradteilgetriebe 15a sind direkt an das Planetengetriebe 13a angebunden. Das erste Stirnradteilgetriebe 14a und das zweite Stirnradteilgetriebe 15a sind direkt über zwei Eingangswellen EW1a, EW2a an das Planetengetriebe 13a angebunden. Das erste Stirnradteilgetriebe 14a ist zur Schaltung von einem Getriebegang vorgesehen, während im zweiten Stirnradteilgetriebe 15a ein Getriebegang eingelegt ist, und umgekehrt. Das erste Stirnradteilgetriebe 14a und das zweite Stirnradteilgetriebe 15a sind voneinander unabhängig, d.h. in dem ersten Stirnradteilgetriebe 14a kann unabhängig von einem Getriebegang, der in dem zweiten Stirnradteilgetriebe 15a eingelegt ist, ein zweiter Getriebegang eingelegt werden, wobei eine Schaltlogik für das gesamte Mehrstufengetriebe, die die zwei Stirnradteilgetriebe 14a, 15a umfasst, durch eine Lastschaltbarkeit zwischen den beiden Stirnradteilgetrieben 14a, 15a festgelegt ist. Die Hybridantriebsvorrichtung 10a weist dazu zwei getrennte Abtriebszahnräder V13a, V23a auf, welche nicht weiter sichtbar mit einem Achsgetriebe 24a des Kraftfahrzeugs 20a gekoppelt sind. Abhängig von einem eingelegten Getriebegang wird eine Antriebskraft des Verbrennungsmotors 11a über das ersten Abtriebszahnrad V13a und/oder über das zweite Abtriebszahnrad V23a auf das Achsgetriebe 24a übertragen. Das Achsgetriebe 24a überträgt die Antriebskraft wiederum nicht weiter sichtbar auf die Antriebsräder 21a. Das Achsgetriebe 24a ist von einem Differential gebildet.

Das Mehrstufengetriebe der Hybridantriebsvorrichtung 10a weist fünf Wellen auf. Die Hybridantriebsvorrichtung 10a weist eine erste Eingangswelle EW1a, eine zweite Eingangswelle EW2a, eine erste Vorgelegewelle V1a, eine zweite Vorgelegewelle V2a und eine gemeinsame Vorgelegewelle V3a auf. Die gemeinsame Vorgelegewelle V3a ist oberhalb der ersten Vorgelegewelle V1a und/oder der zweiten Vorgelegewelle V2a angeordnet. Die gemeinsame Vorgelegewelle V3a ist oberhalb der ersten Vorgelegewelle V1a und der zweiten Vorgelegewelle V2a angeordnet. Die erste Vorgelegewelle V1a weist ein erstes Abtriebszahnrad V13a auf. Die erste Vorgelegewelle V1a bildet eine erste Getriebeausgangswelle aus. Die zweite Vorgelegewelle V2a weist ein zweites Abtriebszahnrad V23a auf. Die zweite Vorgelegewelle V2a bildet eine zweite Getriebeausgangswelle aus.

Die erste Eingangswelle EW1a ist permanent drehfest mit dem zweiten Sonnenrad P23a des zweiten Planetenradsatzes P2a des Planetengetriebes 13a ausgebildet. Das zweite Sonnenrad P23a des zweiten Planetenradsatzes P2a ist fest mit der ersten Eingangswelle EW1a verbunden. Die zweite Eingangswelle EW2a ist permanent drehfest mit dem ersten Planetenradträger P12a des ersten Planetenradsatzes P1a und dem zweiten Planetenradträger P22a des zweiten Planetenradsatzes P2a des Planetengetriebes 13a ausgebildet. Die zweite Eingangswelle EW2a ist dazu fest mit den drehfest miteinander verbundenen Planetenradträgern P12a, P22a des Planetengetriebes 13a verbunden. Die erste Eingangswelle EW1a und die zweite Eingangswelle EW2a sind koaxial zueinander angeordnet. Die erste Eingangswelle EW1a ist von einer Hohlwelle gebildet. Die zweite Eingangswelle EW2a ist in der ersten Eingangswelle EW1a geführt. Die zweite Eingangswelle EW2a erstreckt sich durch die erste Eingangswelle EW1a. Die Vorgelegewellen V1a, V2a, V3a erstrecken sich parallel zu den Eingangswellen EW1a, EW2a. Die erste Vorgelegewelle V1a, die zweite Vorgelegewelle V2a und die gemeinsame Vorgelegewelle V3 sind parallel versetzt zu den Eingangswellen EW1a, EW2a angeordnet.

Das erste Stirnradteilgetriebe 14a weist zumindest ein Zahnrad der ersten Eingangswelle EW1a auf. Das erste Stirnradteilgetriebe 14a weist ein erstes Festrad EW11a und ein zweites Festrad EW12a der ersten Eingangswelle EW1a auf. Ferner weist das erste Stirnradteilgetriebe 14a zumindest ein Zahnrad der ersten Vorgelegewelle V1a auf. Das erste Stirnradteilgetriebe 14a weist ein erstes Losrad V11a der ersten Vorgelegewelle V1a auf. Des Weiteren weist das erste Stirnradteilgetriebe 14a zumindest ein Zahnrad der gemeinsamen Vorgelegewelle V3a auf. Das erste Stirnradteilgetriebe 14a weist ein Losrad V32a der gemeinsamen Vorgelegewelle V3a auf.

Das zweite Stirnradteilgetriebe 15a weist zumindest ein Zahnrad der zweiten Eingangswelle EW2a auf. Das zweite Stirnradteilgetriebe 15a weist ein drittes Festrad EW23a und ein viertes Festrad EW24a der zweiten Eingangswelle EW2a auf. Ferner weist das zweite Stirnradteilgetriebe 15a zumindest ein Zahnrad der zweiten Vorgelegewelle V2a auf. Das zweite Stirnradteilgetriebe 15a weist ein zweites Losrad V22a der zweiten Vorgelegewelle V2a auf. Des Weiteren weist das zweite Stirnradteilgetriebe 15a zumindest ein Zahnrad der gemeinsamen Vorgelegewelle V3a auf. Das zweite Stirnradteilgetriebe 15a weist das Festrad V31a der gemeinsamen Vorgelegewelle V3a auf.

Die Stirnradteilgetriebe 14a, 15a weisen zumindest vier Zahnradebenen Z1a, Z2a, Z3a, Z4a auf. Die Stirnradteilgetriebe 14a, 15a weisen genau vier Zahnradebenen Z1a, Z2a, Z3a, Z4a auf.

Ferner weist die gemeinsame Vorgelegewelle V3a zwei Zahnräder auf. Die gemeinsame Vorgelegewelle V3a weist ein Festrad V31a und ein Losrad V32a auf. Ein erstes Zahnrad der gemeinsamen Vorgelegewelle V3a ist in einer ersten Zahnradebene Z1a angeordnet. Das Festrad V31a der gemeinsamen Vorgelegewelle V3a ist in der ersten Zahnradebene Z1a angeordnet. Ein zweites Zahnrad der gemeinsamen Vorgelegewelle V3a ist in einer zu der ersten Zahnradebene Z1a unbenachbarten weiteren Zahnradebene Z3a angeordnet. Das Losrad V32a der gemeinsamen Vorgelegewelle V3a ist in der zu der ersten Zahnradebene Z1a unbenachbarten weiteren Zahnradebene Z3a angeordnet. Die weitere Zahnradebene Z3a ist von einer dritten Zahnradebene gebildet. Zwischen der ersten Zahnradebenen Z1a und der weiteren Zahnradebene Z3a ist eine zweite Zahnradebene Z2a angeordnet.

Die erste Eingangswelle EW1a weist abtriebsseitig zwei Festräder EW11a, EW12a auf. Die erste Eingangswelle EW1a weist ein erstes Festrad EW11a auf, welches mit einem ersten Losrad V11a der ersten Vorgelegewelle V1a kämmt. Das erste Festrad EW11a der ersten Eingangswelle EW1a kämmt permanent mit dem ersten Losrad V11a der ersten Vorgelegewelle V1a. Das Zahnradpaar des ersten Festrads EW11a und des ersten Losrads V11a der ersten Vorgelegewelle V1a bildet einen Teil des ersten Stirnradteilgetriebes 14a. Die erste Vorgelegewelle V1a weist zwei Losräder V11a, V12a auf. Ferner weist die erste Eingangswelle EW1a ein zweites Festrad EW12a auf, welches mit dem Losrad V32a der gemeinsamen Vorgelegewelle V3a kämmt. Das zweite Festrad EW12a der ersten Eingangswelle EW1a kämmt permanent mit dem Losrad V32a der gemeinsamen Vorgelegewelle V3a. Ferner kämmt das zweite Festrad EW12a der ersten Eingangswelle EW1a mit einem ersten Losrad V21a der zweiten Vorgelegewelle V2a. Das zweite Festrad EW12a der ersten Eingangswelle EW1a kämmt permanent mit dem ersten Losrad V21a der zweiten Vorgelegewelle V2a und mit dem Losrad V32a der gemeinsamen Vorgelegewelle V3a. Das Zahnradpaar des zweiten Festrads EW12a und des ersten Losrads V21a der zweiten Vorgelegewelle V2a bildet einen Teil des ersten Stirnradteilgetriebes 14a. Die zweite Vorgelegewelle V2a weist zwei Losräder V21a, V22a auf.

Die zweite Eingangswelle EW2a weist abtriebsseitig zwei Festräder EW23a, EW24a auf. Die zweite Eingangswelle EW2a weist ein drittes Festrad EW23a und ein viertes Festrad EW24a auf. Aufgrund der Koaxialität der ersten Eingangswelle EW1a und der zweiten Einganswelle EW2a sind der Übersichtlichkeit halber die Festräder EW11a, EW12a, EW23a, EW24a der Eingangswelle EW1a, EW2a fortlaufend als erstes Festrad EW11a, zweites Festrad EW12a, drittes Festrad EW23a und viertes Festrad EW22a bezeichnet. Das dritte Festrad EW23a der zweiten Eingangswelle EW2a kämmt mit einem zweiten Losrad V12a der ersten Vorgelegewelle V1a. Das dritte Festrad EW23a der zweiten Eingangswelle EW2a kämmt permanent mit einem zweiten Losrad V12a der ersten Vorgelegewelle V1a. Das Zahnradpaar des dritten Festrads EW23a und des zweiten Losrads V12a der ersten Vorgelegewelle V1a bildet einen Teil des zweiten Stirnradteilgetriebes 15a. Das vierte Festrad EW24a der zweiten Eingangswelle EW2a kämmt mit dem Festrad V31a der gemeinsamen Vorgelegewelle V3a. Das vierte Festrad EW24a der zweiten Eingangswelle EW2a kämmt permanent mit dem Festrad V31a der gemeinsamen Vorgelegewelle V3a. Ferner kämmt das vierte Festrad EW24a der zweiten Eingangswelle EW2a mit einem zweiten Losrad V22a der zweiten Vorgelegewelle V2a. Das Zahnradpaar des vierten Festrads EW24a und des zweiten Losrads V22a der zweiten Vorgelegewelle V2a bildet einen Teil des zweiten Stirnradteilgetriebes 15a. Das vierte Festrad EW24a der zweiten Eingangswelle EW2a kämmt permanent mit dem zweiten Losrad V22a der zweiten Vorgelegewelle V2a und mit dem Festrad V31a der gemeinsamen Vorgelegewelle V3a.

Ferner weist die Hybridantriebsvorrichtung 10a eine Parksperreinheit 18a auf. Die Parksperreinheit 18a weist ein Parksperrenrad 19a auf. Ferner weist die Parksperreinheit 18a eine nicht weiter sichtbare Sperrklinke auf. Das Parksperrenrad 19a ist permanent drehfest mit der zweiten Vorgelegewelle V2a verbunden. Das Parksperrenrad 19a ist auf einer axial dem Verbrennungsmotor 11a abgewandten Seite der zweiten Vorgelegewelle V2a angeordnet. Das Parksperrenrad 19a ist an einem axial dem Verbrennungsmotor 11a abgewandten Ende der zweiten Vorgelegewelle V2a angeordnet. Grundsätzlich wäre jedoch auch eine andere, einem Fachmann als sinnvoll erscheinende Anordnung des Parksperrenrads 19a oder der gesamten Parksperreinheit 18a denkbar.

Zu einer Schaltung der verschiedenen Getriebegänge des Mehrstufengetriebes weist die Hybridantriebsvorrichtung 10a mehrere Schalteinheiten 25a, 26a, 27a, 28a, 29a, 30a auf. Die Hybridantriebsvorrichtung 10a weist beispielhaft sechs Schalteinheiten 25a, 26a, 27a, 28a, 29a, 30a auf.

Die Hybridantriebsvorrichtung 10a weist eine erste Schalteinheit 25a auf. Die erste Schalteinheit 25a ist der gemeinsamen Vorgelegewelle V3a zugeordnet. Die erste Schalteinheit 25a ist von einer Kupplung, insbesondere mit Reiblamellen, gebildet. Grundsätzlich wäre jedoch auch eine andere, einem Fachmann als sinnvoll erscheinende Ausbildung der Schalteinheit 25a denkbar. Die erste Schalteinheit 25a ist dazu vorgesehen, das Losrad V32a der gemeinsamen Vorgelegewelle V3a drehfest mit dem Festrad V31a der gemeinsamen Vorgelegewelle V3a zu verbinden. Die erste Schalteinheit 25a ist dazu vorgesehen, das Losrad V32a der gemeinsamen Vorgelegewelle V3a drehfest mit der eigentlichen Welle der gemeinsamen Vorgelegewelle V3a zu verbinden. Die erste Schalteinheit 25a verbindet in einem geschlossenen Zustand das Losrad V32a der gemeinsamen Vorgelegewelle V3a drehfest mit der eigentlichen Welle der gemeinsamen Vorgelegewelle V3a.

Die zweite Schalteinheit 26a ist der ersten Eingangswelle EW1a zugeordnet. Die zweite Schalteinheit 26a ist von einer Kupplung, insbesondere mit Reiblamellen, gebildet. Grundsätzlich wäre jedoch auch eine andere, einem Fachmann als sinnvoll erscheinende Ausbildung der Schalteinheit 26a denkbar. Die zweite Schalteinheit 26a ist dazu vorgesehen, die erste Eingangswelle EW1a drehfest mit dem Rotor 17a der elektrischen Maschine 12a zu verbinden. Die zweite Schalteinheit 26a ist dazu vorgesehen, die erste Eingangswelle EW1a drehfest mit dem Hohlrad P11a des ersten Planetenradsatzes P1a zu verbinden. Die zweite Schalteinheit 26a verbindet in einem geschlossenen Zustand die erste Eingangswelle EW1a drehfest mit dem Hohlrad P11a des ersten Planetenradsatzes P1a und mit dem Rotor 17a der elektrischen Maschine 12a.

Die zweite Schalteinheit 26a ist vorteilhaft dazu vorgesehen, das Hohlrad P11a des ersten Planetenradsatzes P1a drehfest mit dem zweiten Sonnenrad P23a des zweiten Planetenradsatzes P2a zu koppeln, womit das Planetengetriebe insgesamt verblockt werden kann.

Die zweite Schalteinheit 26a ist vorteilhaft als Verblockungselement zur Verblockung zweier Wellen des Planetengetriebes ausgebildet. Die zweite Schalteinheit 26a ist generell dazu vorgesehen, zwei der vier Wellen des Planetengetriebes drehfest miteinander zu koppeln. Dies kann auch anders als in den Figuren dargestellt realisiert werden.

Die dritte Schalteinheit 27a ist der ersten Vorgelegewelle V1a zugeordnet. Die dritte Schalteinheit 27a ist Teil des zweiten Stirnradteilgetriebes 15a. Die dritte Schalteinheit 27a ist als Doppelschalteinheit ausgebildet. Die dritte Schalteinheit 27a ist zusammen mit der sechsten Schalteinheit 30a als Doppelschalteinheit ausgebildet. Die dritte Schalteinheit 27a ist als Klauenschalteinheit ausgebildet. Die dritte Schalteinheit 27a ist dazu vorgesehen, das zweite Losrad V12a der ersten Vorgelegewelle V1a drehfest mit der eigentlichen Welle der ersten Vorgelegewelle V1a zu verbinden. Die dritte Schalteinheit 27a verbindet in einem geschlossenen Zustand das zweite Losrad V12a der ersten Vorgelegewelle V1a drehfest mit der eigentlichen Welle der ersten Vorgelegewelle V1a.

Die vierte Schalteinheit 28a ist der zweiten Vorgelegewelle V2a zugeordnet. Die vierte Schalteinheit 28a ist Teil des zweiten Stirnradteilgetriebes 15a. Die vierte Schalteinheit 28a ist als Klauenschalteinheit ausgebildet. Die vierte Schalteinheit 28a ist dazu vorgesehen, das zweite Losrad V22a der zweiten Vorgelegewelle V2a drehfest mit der eigentlichen Welle der zweiten Vorgelegewelle V2a zu verbinden. Die vierte Schalteinheit 28a verbindet in einem geschlossenen Zustand das zweite Losrad V22a der zweiten Vorgelegewelle V2a drehfest mit der eigentlichen Welle der zweiten Vorgelegewelle V2a.

Die fünfte Schalteinheit 29a ist der zweiten Vorgelegewelle V2a zugeordnet. Die fünfte Schalteinheit 29a ist Teil des ersten Stirnradteilgetriebes 14a. Die fünfte Schalteinheit 29a ist als Klauenschalteinheit ausgebildet. Die fünfte Schalteinheit 29a ist dazu vorgesehen, das erste Losrad V21a der zweiten Vorgelegewelle V2a drehfest mit der eigentlichen Welle der zweiten Vorgelegewelle V2a zu verbinden. Die fünfte Schalteinheit 29a verbindet in einem geschlossenen Zustand das erste Losrad V21a der zweiten Vorgelegewelle V2a drehfest mit der eigentlichen Welle der zweiten Vorgelegewelle V2a.

Die sechste Schalteinheit 30a ist der ersten Vorgelegewelle V1a zugeordnet. Die sechste Schalteinheit 30a ist Teil des ersten Stirnradteilgetriebes 14a. Die sechste Schalteinheit 30a ist als Doppelschalteinheit ausgebildet. Die sechste Schalteinheit 30a ist zusammen mit der dritten Schalteinheit 27a als Doppelschalteinheit ausgebildet. Die sechste Schalteinheit 30a ist als Klauenschalteinheit ausgebildet. Die sechste Schalteinheit 30a ist dazu vorgesehen, das erste Losrad V11a der ersten Vorgelegewelle V1a drehfest mit der eigentlichen Welle der ersten Vorgelegewelle V1a zu verbinden. Die sechste Schalteinheit 30a verbindet in einem geschlossenen Zustand das erste Losrad V11a der ersten Vorgelegewelle V1a drehfest mit der eigentlichen Welle der Vorgelegewelle V1a.

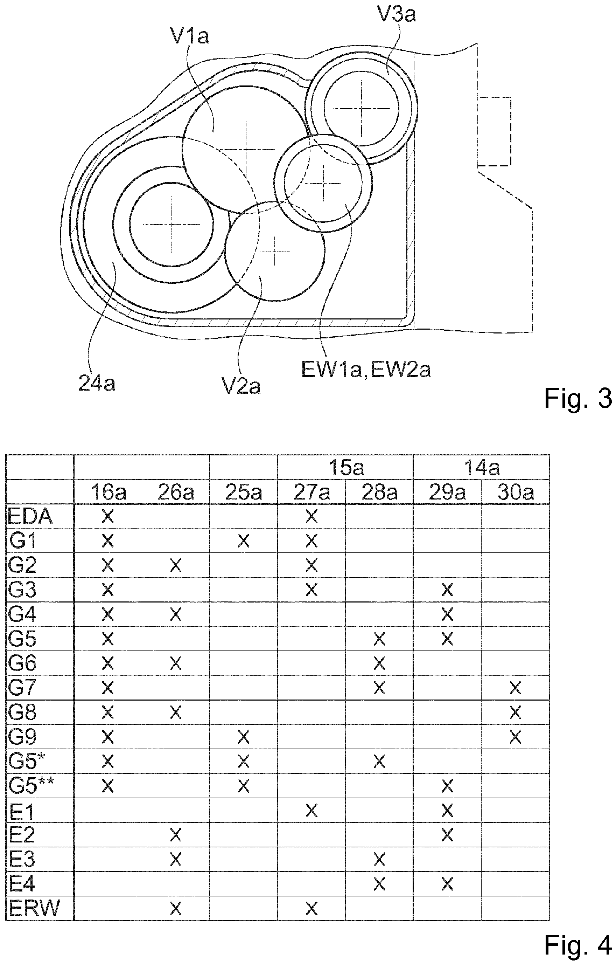

Eine Schaltstrategie zum Schalten der Schalteinheiten 25a, 26a, 27a, 28a, 29a, 30a kann der Tabelle in Figur 4 entnommen werden. Es sind neun Vorwärtsgetriebegänge G1, G2, G3, G4, G5, G6, G7, G8, G9, ein Überlagerungs-Betriebsmodus EDA, vier rein elektrische Vorwärtsgänge E1, E2, E3, E4 sowie ein elektrischer Rückwärtsgang ERW schaltbar. Es existieren weitere redundante und zusätzliche Vorwärtsgetriebegänge G5*, G5**, dessen Übersetzungsverhältnisse dem Übersetzungsverhältnis des fünften Vorwärtsgetriebegangs G5 entspricht. Durch die redundanten Gänge kann insbesondere eine vorteilhaft hohe Schaltflexibilität erreicht werden. In den rein elektrischen Vorwärtsgängen E1, E2, E3, E4 wird das Mehrstufengetriebe der Hybridantriebsvorrichtung 10a ausschließlich von der elektrischen Maschine 12a angetrieben. Eine Markierung in der entsprechenden Zeile bedeutet jeweils, dass die entsprechende Schalteinheit 25a, 26a, 27a, 28a, 29a, 30a und/oder die Trennkupplung 16a geschlossen ist, um jeweils den in der ersten Spalte angezeigten Getriebegang zu schalten.

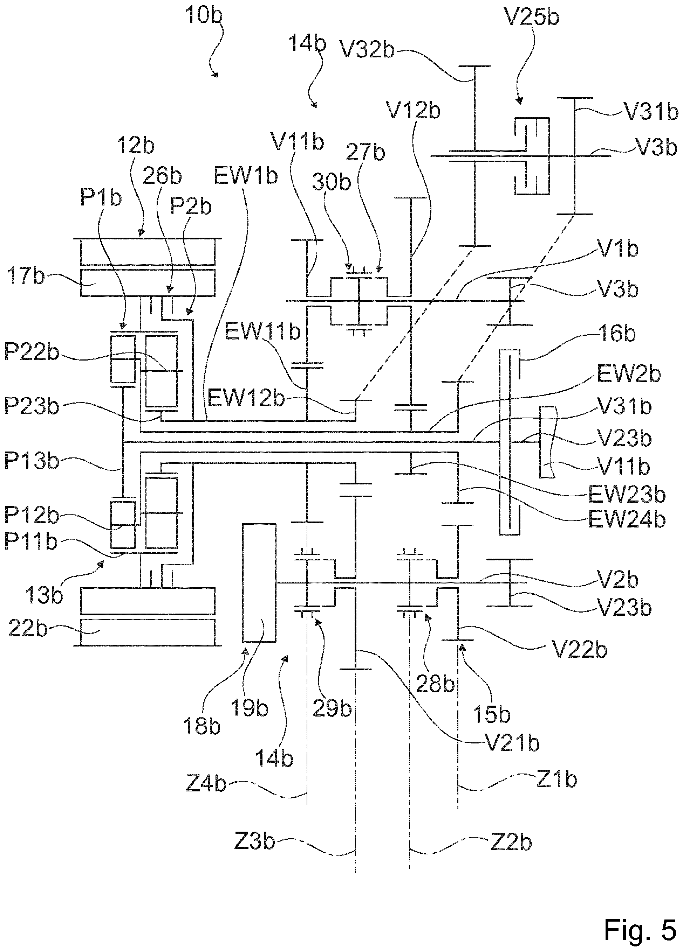

In der Figur 5 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung des anderen Ausführungsbeispiels, insbesondere der Figuren 1 bis 4, verwiesen werden kann. Zur Unterscheidung der Ausführungsbeispiele ist der Buchstabe a in den Bezugszeichen des Ausführungsbeispiels der Figuren 1 bis 4 durch den Buchstaben b in den Bezugszeichen des Ausführungsbeispiels der Figur 5 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des anderen Ausführungsbeispiels, insbesondere der Figuren 1 bis 4, verwiesen werden.

Figur 5 zeigt eine Hybridantriebsvorrichtung 10b mit einem Verbrennungsmotor 11b, mit einer elektrischen Maschine 12b, mit einem Planetengetriebe 13b und mit zwei Stirnradteilgetrieben 14b, 15b. Die elektrische Maschine 12b ist auf einer dem Verbrennungsmotor 11b abgewandten Seite der Hybridantriebsvorrichtung 10b angeordnet. Ferner ist das erste Stirnradteilgetriebe 14b in einer axialen Richtung hinter dem zweiten Stirnradteilgetriebe 15b angeordnet.

Die Hybridantriebsvorrichtung 10b weist fünf Wellen auf. Das Mehrstufengetriebe der Hybridantriebsvorrichtung 10b weist fünf Wellen auf. Die Hybridantriebsvorrichtung 10b weist eine erste Eingangswelle EW1b, eine zweite Eingangswelle EW2b, eine erste Vorgelegewelle V1b, eine zweite Vorgelegewelle V2b und eine gemeinsame Vorgelegewelle V3b auf. Die erste Eingangswelle EW1b und die zweite Eingangswelle EW2b sind koaxial zueinander angeordnet. Die erste Eingangswelle EW1b ist von einer Hohlwelle gebildet. Die zweite Eingangswelle EW2b ist in der ersten Eingangswelle EW1b geführt. Die zweite Eingangswelle EW2b erstreckt sich durch die erste Eingangswelle EW1b. Die zweite Eingangswelle EW2b ist ebenfalls von einer Hohlwelle gebildet.

Ferner ist der Verbrennungsmotor 11b über eine Trennkupplung 16b an das Planetengetriebe 13b angebunden. Dazu ist ein erstes Kopplungselement der Trennkupplung 16b permanent mit einer Kurbelwelle 23b des Verbrennungsmotors 11b gekoppelt. Ein zweites Kopplungselement der Trennkupplung 16b ist permanent drehfest mit einem ersten Sonnenrad P13b eines ersten Planetenradsatzes P1b des Planetengetriebes 13b gekoppelt. Eine Verbindungswelle 31b, welche das erste Sonnenrad P13b mit der Trennkupplung 16b verbindet, erstreckt sich durch die zweite Eingangswelle EW2b. Die Verbindungswelle 31b ist in der zweiten Eingangswelle EW2b geführt.

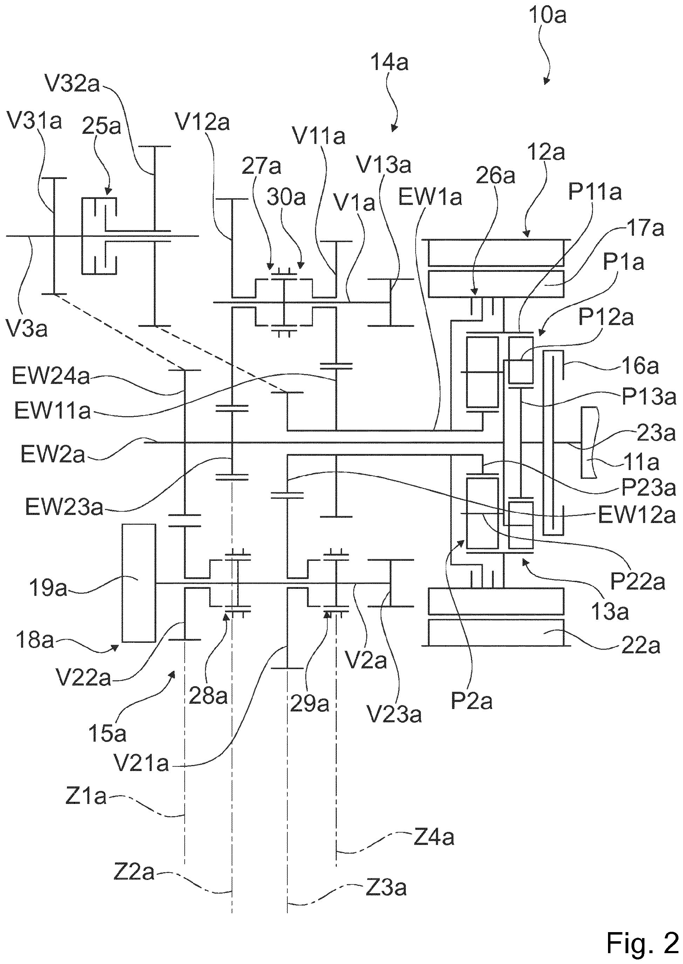

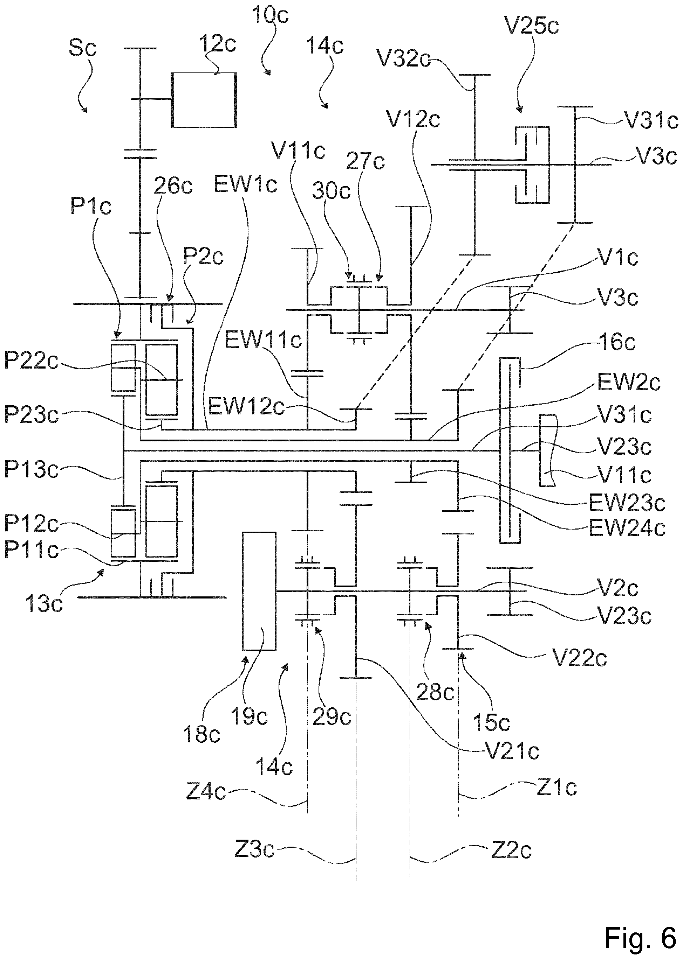

Figur 6 zeigt eine Hybridantriebsvorrichtung 10c, die sich von der Ausführungsform in den anderen Figuren vor allem darin unterscheidet, dass die elektrische Maschine 12c achsparallel zu dem Hohlrad P11c angeordnet und über eine Stirnradstufe Sc an dieses drehmomentübertragend angeordnet ist. Eine derartige Anordnung der elektrischen Maschine 12 an das Hohlrad P11 ist selbstverständlich auch bei der in Fig. 2 gezeigten Ausführungsform vorteilhaft.

### Bezugszeichenliste

- 10: Hybridantriebsvorrichtung
- 11: Verbrennungsmotor
- 12: Maschine
- 13: Planetengetriebe
- 14: Stirnradteilgetriebe
- 15: Stirnradteilgetriebe
- 16: Trennkupplung
- 17: Rotor
- 18: Parksperreinheit
- 19: Parksperrenrad
- 20: Kraftfahrzeug
- 21: Antriebsrad
- 22: Stator
- 23: Kurbelwelle
- 24: Achsgetriebe
- 25: Schalteinheit
- 26: Schalteinheit
- 27: Schalteinheit
- 28: Schalteinheit
- 29: Schalteinheit
- 30: Schalteinheit
- 31: Verbindungswelle
- P1: Erster Planetenradsatz
- P11: Hohlrad
- P12: Erster Planetenradträger
- P13: Erstes Sonnenrad
- P2: Zweiter Planetenradsatz
- P22: Zweiter Planetenradträger
- P23: Zweites Sonnenrad
- E1: Vorwärtsgang
- E2: Vorwärtsgang
- E3: Vorwärtsgang
- E4: Vorwärtsgang
- EDA: Überlagerungs-Betriebsmodus
- ERW: Rückwärtsgang
- EW1: Eingangswelle
- EW11: Festrad
- EW12: Festrad
- EW2: Eingangswelle
- EW23: Festrad
- EW24: Festrad
- G1: Vorwärtsgetriebegang
- G2: Vorwärtsgetriebegang
- G3: Vorwärtsgetriebegang
- G4: Vorwärtsgetriebegang
- G5: Vorwärtsgetriebegang
- G5*: Vorwärtsgetriebegang
- G5**: Vorwärtsgetriebegang
- G6: Vorwärtsgetriebegang
- G7: Vorwärtsgetriebegang
- G8: Vorwärtsgetriebegang
- G9: Vorwärtsgetriebegang
- S: Stirnradstufe
- V1: Vorgelegewelle
- V11: Losrad
- V12: Losrad
- V13: Abtriebszahnrad
- V2: Vorgelegewelle
- V21: Losrad
- V22: Losrad
- V23: Abtriebszahnrad
- V3: Vorgelegewelle
- V31: Festrad
- V32: Losrad
- Z1: Zahnradebene
- Z2: Zahnradebene
- Z3: Zahnradebene
- Z4: Zahnradebene

## Patentansprüche

1. Hybridantriebsvorrichtung mit einem Verbrennungsmotor (11a; 11b), mit einer elektrischen Maschine (12a; 12b), die einen Rotor (17a; 17b) aufweist, mit einem Planetengetriebe (13a; 13b), mit einem ersten Stirnradteilgetriebe (14a; 14b) und mit einem zweiten Stirnradteilgetriebe (15a; 15b), wobei das erste Stirnradteilgetriebe (14a; 14b) eine erste Eingangswelle (EW1a; EW1b) aufweist und das zweite Stirnradteilgetriebe (15a; 15b) eine zweite Eingangswelle (EW2a; EW2b) aufweist,
wobei die elektrische Maschine (12a; 12b) direkt an das Planetengetriebe (13a; 13b) angebunden ist, wobei das erste
Stirnradteilgetriebe (14a; 14b) und das zweite Stirnradteilgetriebe (15a; 15b) direkt an das Planetengetriebe (13a; 13b) angebunden sind, wobei das Planetengetriebe (13a; 13b) zwei Planetenradsätze (P1a, P2a; P1b, P2b) aufweist, wobei ein erster Planetenradsatz (P1a; P1b) des Planetengetriebes (13a; 13b) ein Hohlrad (P11a; P11b), einen ersten Planetenradträger (P12a; P12b), und ein erstes Sonnenrad (P13a; P13b) aufweist,
wobei der zweite Planetenradsatz (P2a, P2b) ein zweites Hohlrad (P11a; P11b) aufweist und das Hohlrad (P11a; P11b)und das zweite Hohlrad (P11a; P11b) drehfest miteinander gekoppelt sind und mit dem Rotor (17a; 17b) der elektrischen Maschine (12a; 12b) drehmomentübertragend gekoppelt sind, wobei die zweite Eingangswelle (EW2a; EW2b) permanent drehfest mit dem ersten Planetenradträger (P12a; P12b) des ersten Planetenradsatzes (P1a; P1b) des Planetengetriebes (13a; 13b) gekoppelt ist,
**dadurch gekennzeichnet, dass**
der Verbrennungsmotor (11a; 11b) über eine Trennkupplung (16a; 16b) an das Planetengetriebe (13a; 13b) angebunden ist und dass
der erste Planetenradträger (P12a; P12b) des ersten Planetenradsatzes (P1a; P1b) mit einem zweiten Planetenradträger (P22a; P22b) des zweiten Planetenradsatzes (P2a; P2b) drehfest gekoppelt ist.

2. Hybridantriebsvorrichtung nach Anspruch 1,
**dadurch gekennzeichnet, dass**
das Hohlrad (P11a; P11b) und das zweite Hohlrad (P11a; P11b) ein gemeinsames Hohlrad (P11a; P11b)ausbilden.

3. Hybridantriebsvorrichtung nach Anspruch 1,
**gekennzeichnet durch**
eine gemeinsame Vorgelegewelle (V3a; V3b), welche ein Festrad (V31a; V31b) und ein Losrad (V32a; V32b) aufweist, wobei das Festrad (V31a; V31b) permanent mit einem Rad des ersten Stirnradteilgetriebes (14a; 14b) kämmt und das Losrad (V32a; V32b) permanent mit einem Rad des zweiten Stirnradteilgetriebes (15a; 15b) kämmt.

4. Hybridantriebsvorrichtung nach Anspruch 3,
**dadurch gekennzeichnet, dass**
das Festrad (V31a; V31b) der gemeinsamen Vorgelegewelle (V3a; V3b) permanent mit einem Festrad (EW24a; EW24b) der zweiten Eingangswelle (EW2a; EW2b) kämmt und das Losrad (V32a; V32b) der gemeinsamen Vorgelegewelle (V3a; V3b) permanent mit einem Festrad (EW12a; EW12b) der ersten Eingangswelle (EW1a; EW1b) kämmt.

5. Hybridantriebsvorrichtung nach Anspruch 3,
**dadurch gekennzeichnet, dass**
das Festrad (V31a; V31b) der gemeinsamen Vorgelegewelle (V3a; V3b) in einer ersten Zahnradebene (Z1a; Z1b) angeordnet ist und das Losrad (V32a; V32b) der gemeinsamen Vorgelegewelle (V3a; V3b) in einer zu der ersten Zahnradebene (Z1a; Z1b) unbenachbarten weiteren Zahnradebene (Z3a; Z3b) angeordnet ist.

6. Hybridantriebsvorrichtung zumindest nach einem der vorhergehenden Ansprüche,
**dadurch gekennzeichnet, dass**
die erste Eingangswelle (EW1a; EW1b) ein erstes Festrad (EW11a; EW11b) aufweist, welches mit einem Losrad (V11a; V11b) einer ersten Vorgelegewelle (V1a; V1b) kämmt.

7. Hybridantriebsvorrichtung zumindest nach Anspruch 6,
**dadurch gekennzeichnet, dass**
die zweite Eingangswelle (EW2a; EW2b) ein drittes Festrad (EW23a; EW23b) aufweist, welches mit einem Losrad (V12a; V12b) der ersten Vorgelegewelle (V1a; V1b) kämmt.

8. Hybridantriebsvorrichtung zumindest nach einem der vorhergehenden Ansprüche,
**dadurch gekennzeichnet, dass**
ein viertes Festrad (EW24a; EW24b) der zweiten Eingangswelle (EW2a; EW2b) mit einem Losrad (V22a; V22b) einer zweiten Vorgelegewelle (V2a; V2b) kämmt.

9. Hybridantriebsvorrichtung zumindest nach Anspruch 8,
**dadurch gekennzeichnet, dass**
ein zweites Festrad (EW12a; EW12b) der ersten Eingangswelle (EW1a; EW1b) mit einem Losrad (V21a; V21b) der zweiten Vorgelegewelle (V2a; V2b) kämmt.

10. Hybridantriebsvorrichtung nach einem der vorhergehenden Ansprüche,
**dadurch gekennzeichnet, dass**
die Stirnradteilgetriebe (14a, 15a; 14b, 15b) genau vier Zahnradebenen (Z1a, Z2a, Z3a, Z4a; Z1b, Z2b, Z3b, Z4b) aufweisen.

11. Hybridantriebsvorrichtung zumindest nach Anspruch 3,
**dadurch gekennzeichnet, dass**
die gemeinsame Vorgelegewelle (V3a; V3b) hinsichtlich einer horizontalen Ebene auf einer anderen Seite angeordnet ist als eine Aktuatorik von Schalteinheiten (27a; 27b; 28a; 28b; 29a; 29b; 30a; 30b) des ersten Stirnradteilgetriebes (14a; 14b) und des zweiten Stirnradteilgetriebes (15a; 15b) angeordnet ist.

12. Hybridantriebsvorrichtung nach einem der vorhergehenden Ansprüche,
**dadurch gekennzeichnet, dass**
die erste Eingangswelle (EW1a; EW2a) permanent drehfest mit einem zweiten Sonnenrad (P23a) des zweiten Planetenradsatzes (P2a; P2b) des Planetengetriebes (13a; 13b) gekoppelt ist.

13. Hybridantriebsvorrichtung nach Anspruch 3,
**gekennzeichnet durch**
eine Schalteinheit (25a; 25b), welche dazu vorgesehen ist, das Losrad (V32a; V32b) der gemeinsamen Vorgelegewelle (V3a; V3b) drehfest mit dem Festrad (V31a; V31b) der gemeinsamen Vorgelegewelle (V3a; V3b) zu verbinden.

14. Hybridantriebsvorrichtung nach einem der vorhergehenden Ansprüche,
**dadurch gekennzeichnet, dass**
der Rotor (17a; 17b) der elektrischen Maschine (12a; 12b) drehfest mit dem Hohlrad (P11a; P11b) und dem zweite Hohlrad (P11a; P11b) gekoppelt ist.

## Claims

1. Hybrid drive device with an internal combustion engine (11a; 11b), with an electric machine (12a; 12b) having a rotor (17a; 17b), with a planetary gearbox (13a; 13b), with a first spur gear sub-unit (14a; 14b) and with a second spur gear sub-unit (15a; 15b), wherein the first spur gear sub-unit (14a; 14b) has a first input shaft (EW1a; EW1b) and the second spur gear sub-unit (15a; 15b) has a second input shaft (EW2a; EW2b),
wherein the electric machine (12a; 12b) is directly connected to the planetary gearbox (13a; 13b),
wherein the first spur gear sub-unit (14a; 14b) and the second spur gear sub-unit (15a; 15b) are directly connected to the planetary gearbox (13a; 13b), wherein the planetary gearbox (13a; 13b) has two planetary gear sets (P1a, P2a; P1b, P2b), wherein a first planetary gear set (P1a; P1b) of the planetary gearbox (13a; 13b) has a ring gear (P11a; P11b), a first planetary carrier (P12a; P12b) and a first sun gear (P13a; P13b),
wherein the second planetary gear set (P2a, P2b) has a second ring gear (P11a; P11b) and the ring gear (P11a; P11b) and the second ring gear (P11a; P11b) are non-rotatably coupled to each other and coupled for torque transmission to the rotor (17a; 17b) of the electric machine (12a; 12b),
wherein the second input shaft (EW2a; EW2b) is permanently non-rotatably coupled to the first planetary carrier (P12a; P12b) of the first planetary gear set (P1a; P1b) of the planetary gearbox (13a; 13b)
**characterised in that**
the internal combustion engine (11a; 11b) is connected to the planetary gearbox (13a; 13b) via a decoupler (16a; 16b), and **in that**
the first planetary carrier (P12a; P12b) of the first planetary gear set (P1a; P1b) is non-rotatably coupled to a second planetary carrier (P22a; P22b) of the second planetary gear set (P2a; P2b).

2. Hybrid drive device according to claim 1,
**characterised in that**
the first ring gear (P11a; P11b) and the second ring gear (P11a; P11b) form a joint ring gear (P11a; P11b).

3. Hybrid drive device according to claim 1,
**characterised by**
a joint layshaft (V3a) having a fixed gear (V31a; V31b) and an idler gear (V32a; 32b), wherein the fixed gear (V31a; V31b) permanently meshes with a gear of the first spur gear sub-unit (14a; 14b) and the idler gear (V32a; 32b) permanently meshes with a gear of the second spur gear sub-unit (15a; 15b).

4. Hybrid drive device according to claim 3,
**characterised in that**
the fixed gear (V31a; V31b) of the joint layshaft (V3a; V3b) permanently meshes with a fixed gear (EW24a; EW24b) of the second input shaft (EW2a; EW2b) and the idler gear (V32a; 32b) of the joint layshaft (V3a; V3b) permanently meshes with a fixed gear (EW12a; EW12b) of the first input shaft (EW1a; EW1b).

5. Hybrid drive device according to claim 3,
**characterised in that**
the fixed gear (V31a; V31b) of the joint layshaft (V3a; V3b) is located in a first gear plane (Z1a; Z1b) and the idler gear (V32a; V32b) of the joint layshaft (V3a; V3b) is located in a further gear plane (Z3a; Z3b) non-adjacent to the first gear plane (Z1a; Z1b).

6. Hybrid drive device according to any of the preceding claims,
**characterised in that**
the first input shaft (EW1a; EW1b) has a first fixed gear (EW11a; EW11b), which meshes with an idler gear (V11a; V11b) of a first layshaft (V1a; V1b).

7. Hybrid drive device according to claim 6,
**characterised in that**
the second input shaft (EW2a; EW2b) has a third fixed gear (EW23a; EW23b), which meshes with an idler gear (V12a; V12b) of the first layshaft (V1a; V1b).

8. Hybrid drive device according to any of the preceding claims,
**characterised in that**
a fourth fixed gear (EW24a; EW24b) of the second input shaft (EW2a; EW2b) meshes with an idler gear (V22a; V22b) of the second layshaft (V2a; V2b).

9. Hybrid drive device according to claim 8,
**characterised in that**
a second fixed gear (EW12a; EW12b) of the first input shaft (EW1a; EW1b) meshes with an idler gear (V21a; V21b) of the second layshaft (V2a; V2b).

10. Hybrid drive device according to any of the preceding claims,
**characterised in that**
the spur gear units (14a, 15a; 14b, 15b) have precisely four gear planes (Z1a, Z2a, Z3a, Z4a; Z1b, Z2b, Z3b, Z4b).

11. Hybrid drive device according to at least claim 3,
**characterised in that**
the joint layshaft (V3a; V3b) is, with respect to a horizontal plane, located on another side than an actuator system of switching units (27a; 27b; 28a; 28b; 29a; 29b; 30a; 30b) of the first spur gear sub-unit (14a; 14b) and the second spur gear sub-unit (15a; 15b).

12. Hybrid drive device according to any of the preceding claims,
**characterised in that**
the first input shaft (EW1a; EW1b) is permanently non-rotatably coupled to a sun gear (P23a) of the second planetary gear set (P2a; P2b) of the planetary gearbox (13a; 13b).

13. Hybrid drive device according to claim 3,
**characterised by**
a switching unit (25a; 25b) provided to connect the idler gear (V32a; V32b) of the joint layshaft (V3a; V3b) non-rotatably to the fixed gear (V31a; V31b) of the joint layshaft (V3a; V3b).

14. Hybrid drive device according to any of the preceding claims,
**characterised in that**
the rotor (17a; 17b) of the electric machine (12a; 12b) is non-rotatably coupled to the ring gear (P11a; P11b) and the second ring gear (P11a; P11b).

## Revendications

1. Dispositif d'entraînement hybride comprenant un moteur à combustion interne (11a, 11b), comprenant une machine électrique (12, 1, 12b) qui comporte un rotor (17a, 17b), comprenant une boîte de vitesses à trains épicycloïdaux (13a, 13b), comprenant un premier réducteur à train cylindrique (14a, 14b) et comprenant un second réducteur à train cylindrique (15a, 15b), le premier réducteur à train cylindrique (14a, 14b) présentant un premier arbre d'entrée (EW1a, EW1b) et le second réducteur à train cylindrique (15a, 15b) présentant un second arbre d'entrée (EW2a, EW2b),
dans lequel la machine électrique (12a, 12b) est directement reliée à la boîte de vitesses à trains épicycloïdaux (13a, 13b),
dans lequel le premier réducteur à train cylindrique (14a, 14b) et le second réducteur à train cylindrique (15a, 15b) sont directement reliées à la boîte de vitesses à trains épicycloïdaux (13a, 13b),
dans lequel la boîte de vitesses à trains épicycloïdaux (13a, 13b) comporte deux trains planétaires (P1a, P2a, P1b, P2b), un premier train planétaire (P1a, P1b) de la boîte de vitesses à trains épicycloïdaux (13a, 13b) comportant une couronne (P11A, P11b), un premier porte-satellite (P12a, P12b) et un premier pignon planétaire (P13a, P13b),
dans lequel le second train planétaire (P2a, P2b) comporte une seconde couronne (P11a, P11b) et la couronne (P11a, P11b) et la seconde couronne (P11a, P11b) sont accouplées solidaires en rotation l'une à l'autre et sont couplées au rotor (17a, 17b) de la machine électrique (12a, 12b) par transmission de couple de rotation,
dans lequel le second arbre d'entrée (EW2a, EW2b) est couplé solidaire en rotation en permanence avec le premier porte-satellite (P12a, P12b) du premier train planétaire (P1a, P1b) de la boîte de vitesses à trains épicycloïdaux (13a, 13b),
**caractérisé en ce que** le moteur à combustion interne (11a, 11b) est relié à la boîte de vitesses à trains épicycloïdaux (13a, 13b) par le biais d'un embrayage de séparation (16a, 16b) et **en ce que** le premier porte-satellite (P12a, P12b) du premier train planétaire (P1a, P1b) est accouplé solidaire en rotation au second porte-satellite (P2a, P2b) du second train planétaire (P2a, P2b).

2. Dispositif d'entraînement hybride selon la revendication 1, **caractérisé en ce que** la couronne (P11a, P11b) et la seconde couronne (P11a, P11b) forment une couronne commune (P11a, P11b).

3. Dispositif d'entraînement hybride selon la revendication 1, **caractérisé par** un arbre intermédiaire commun (V3a, V3b) qui comporte un pignon solidaire (V31a, V31b) et un pignon indépendant (V32a, V32b), le pignon solidaire (V31a, V31b) s'engrenant en permanence avec une roue du premier réducteur à train cylindrique (14a, 14b), et le pignon indépendant (V32a, V32b) s'engrenant en permanence avec une roue du second premier réducteur à train cylindrique (15a, 15b).

4. Dispositif d'entraînement hybride selon la revendication 3, **caractérisé en ce que** le pignon solidaire (V31a, V31b) de l'arbre intermédiaire commun (V3a, V3b) s'engrène en permanence avec un pignon solidaire (EW24a, EW24b) du second arbre d'entrée (EW2a, EW2b) et **en ce que** le pignon indépendant (V32a, V32b) de l'arbre intermédiaire commun (V3a, V3b) s'engrène en permanence avec un pignon solidaire (EW12a, EW12b) du premier arbre d'entrée (EW1a, EW1b).

5. Dispositif d'entraînement hybride selon la revendication 3, **caractérisé en ce que** le pignon solidaire (V31a, V31b) de l'arbre intermédiaire commun (V3a, V3b) est disposé dans un premier plan de roue dentée (Z1a, Z1b) et **en ce que** le pignon indépendant (V32a, V32b) de l'arbre intermédiaire commun (V3a, V3b) est disposé dans un autre plan de roue dentée (Z3a, Z3b) non adjacent au premier plan de roue dentée (Z1a,Z1b).

6. Dispositif d'entraînement hybride selon l'une quelconque des revendications précédentes, **caractérisé en ce que** le premier arbre d'entrée (EW1a, EW1b) comporte un premier pignon solidaire (EW11a, EW11b) qui s'engrène avec un pignon indépendant (V11a, V11b) du premier arbre intermédiaire (V1a, V1b).

7. Dispositif d'entraînement hybride selon la revendication 6, **caractérisé en ce que** le second arbre d'entrée (EW2a, EW2b) comporte un troisième pignon solidaire (EW23a, EW23b) qui s'engrène avec un pignon indépendant (V12a, V12b) du premier arbre intermédiaire (V1a, V1b).

8. Dispositif d'entraînement hybride selon l'une quelconque des revendications précédentes, **caractérisé en ce qu'**un quatrième pignon solidaire (EW24a, EW24b) du second arbre d'entrée (EW2a, EW2b) s'engrène avec un pignon indépendant (V22a, V22b) d'un second arbre intermédiaire (V2a, V2b).

9. Dispositif d'entraînement hybride selon la revendication 8, **caractérisé en ce qu'**un deuxième pignon solidaire (EW12a, EW12b) du premier arbre d'entrée (EW1a, EW1b) s'engrène avec un pignon indépendant (V21a, V21b) du second arbre intermédiaire (V2a, V2b).

10. Dispositif d'entraînement hybride selon l'une quelconque des revendications précédentes, **caractérisé en ce que** le réducteur à train cylindrique (14a, 15a, 14b, 15b) comporte précisément quatre plans de roue dentée (Z1a, Z2a, Z3a, Z4a, Z1b, Z2b, Z3b, Z4b).

11. Dispositif d'entraînement hybride selon la revendication 3, **caractérisé en ce que** l'arbre intermédiaire commun (V3a, V3b) par rapport à un plan horizontal est disposé sur un autre coté qu'un actionneur des unités de commutation (27a, 27b, 28a, 28b, 29a, 29b, 30a, 30b) du premier réducteur à train cylindrique (14a, 14b) et du second réducteur à train cylindrique (15a, 15b).

12. Dispositif d'entraînement hybride selon l'une quelconque des revendications précédentes, **caractérisé en ce que** le premier arbre d'entrée (EW1a, EW2a) est couplé solidaire en rotation en permanence avec le second pignon planétaire (P23a) du second porte-satellite (P2a, P2b) de la boîte de vitesses à trains épicycloïdaux (13a, 13b).

13. Dispositif d'entraînement hybride selon la revendication 3, **caractérisé par** une unité de commutation (25a, 25b) qui est prévue pour relier solidaire en rotation le pignon indépendant (V32a, V32b) de l'arbre intermédiaire commun (V3a, V3b) au pignon solidaire (V31a, V31b) de l'arbre intermédiaire commun (V3a, V3b).

14. Dispositif d'entraînement hybride selon l'une quelconque des revendications précédentes, **caractérisé en ce que** le rotor (17a, 17b) de la machine électrique (12a, 12b) est couplé solidaire en rotation avec la couronne (P11a, P11b) et avec la seconde couronne (P11A, P11b).
